# EUROPEAN PATENT SPECIFICATION

(11) **EP 1 881 895 B1**
(45) Date of publication and mention of the grant of the patent: **20.05.2015**
(21) Application number: 06799347.7
(22) Date of filing: 20.10.2006
(51) Int. Cl.: B32B 27/12

(54) **FLOORING HAVING TRANSFER-PRINTED HDF AND PROCESS FOR MANUFACTURING THE SAME**
FUSSBODEN MIT TRANSFERGEDRUCKTEM HDF UND HERSTELLUNGSVERFAHREN DAFÜR
PLANCHER COMPORTANT DES PANNEAUX DE FIBRES HAUTE DENSITÉ À DÉCOR IMPRIMÉ ET SON PROCÉDÉ DE FABRICATION

(30) Priority: 25.04.2006 KR 20060036983
(43) Date of publication of application: 30.01.2008
(73) Proprietor: LG Chemical Limited, Seoul 150-721 (KR)
(72) Inventor: HWANG, Sung-Chul, Chungcheongbuk-do 361-758 (KR); NAM, Seung-Baik, Chungcheongbuk-do 361-758 (KR); LEE, Seung-Hun, Chungcheongbuk-do 361-758 (KR); KIM, Jong-Bum, Jeollabuk-do 560-151 (KR); SUNG, Jae-Wan, Chungcheongbuk-do 361-758 (KR)
(74) Representative: Hoffmann Eitle
(86) International application number: PCT/KR2006/004273
(87) International publication number: WO 2007/123298

(56) References cited:
- WO-A1-2004/098881
- WO-A1-2005/116361
- WO-A1-2005/123380
- WO-A1-2006/033510
- WO-A1-2007/086632
- KR-A- 20000 063 296
- KR-A- 20010 087 432
- US-A- 4 362 775
- US-A1- 2004 185 231

## Description

### Technical Field

The present invention relates to a flooring comprising a transfer-printed high-density fiberboard (HDF) and a process for manufacturing the flooring. More specifically, the present invention relates to a low-priced and highly durable flooring comprising a high-density fiberboard as a core layer and an aqueous primer layer formed on the core layer wherein transfer printing is performed on the surface of the primer layer to form a printed layer so that the background fiber pattern of the high-density fiberboard is covered, the adhesion of the core layer to the printed layer is enhanced, and the natural beauty of wood is faithfully imparted to the surface of the flooring.

### Background Art

Conventional floorings for under-floor heating systems are manufactured by laminating a natural veneer on a water-resistant plywood and treating the natural veneer by surface coating. Such conventional floorings for under-floor heating systems have advantages in that the natural texture of wood is maximized and superior dimensional stability against heat and moisture is ensured due to the use of a water-resistant plywood. However, since a low-density veneer and a low-density water-resistant plywood (0.6-0.8 g/cm³) are used, conventional floorings for under-floor heating systems suffer from poor scratch resistance (0.5-3.0 N, as measured by scratching the surface of the floorings using a diamond chip) and poor impact resistance (10-20 cm, as measured by dropping a metal ball weighing 225g onto the surface of the floorings) although UV coating is performed on the surface of the floorings. Poor resistance to scratch and impact of conventional floorings generally causes many problems. For example, when a consumer drops a household appliance by mistake or transports a heavy object on the surface of conventional floorings, damage to the surface of the flooring may occur. In addition, a low thermal conductivity of conventional floorings leads to an energy loss.

On the other hand, conventional laminate floorings are manufactured by sequentially laminating a printed layer and a melamine-impregnated overlay sheet on a high-density fiberboard (HDF) layer as a base layer and laminating a balance layer under the base layer. Such conventional laminate floorings have a rigid surface, compared to water-resistant plywood floorings for under-floor heating systems. However, since the surface of conventional laminate floorings is composed of a thermosetting melamine resin, it is sensitive to moisture and is highly likely to be brittle, thus giving a feeling of coldness to consumers. In addition, when a sharp or heavy object having a load exceeding a predetermined value drops onto conventional laminate floorings, the impact site is partly damaged, e.g., broken or indented. Furthermore, since the surface of conventional laminate floorings is artificially printed, the laminate floorings exhibit inferior natural texture of wood when compared to conventional water-resistant plywood floorings for under-floor heating systems.

WO-A-2005/123380 discloses a flooring comprising in order HDF, an adhesive layer and a printed layer.

WO-A-2006/033510 discloses a UV surface-coated laminate wood flooring comprising in order a substrate, an adhesive layer and a printed wood veneer layer.

WO-A-2004/098881 discloses a back-grooved laminate wood flooring comprising in order a substrate, an adhesive layer and a wood veneer of high pressure resin impregnation laminate.

WO-A-2005/116361 teaches a wood panel coated in turn with a primer and a varnish layer. A functional layer may be arranged either below the varnish layer or between at least two varnish layers.

### Disclosure of Invention

### Technical Problem

The present invention has been made in view of the above-mentioned problems of the conventional floorings, and it is one object of the present invention to provide a flooring comprising a high-density fiberboard as a core layer and an aqueous primer layer formed on the core layer wherein transfer printing is performed on the surface of the primer layer to form a printed layer so that the background fiber pattern of the high-density fiberboard is covered, the adhesion of the core layer to the printed layer is enhanced, the natural beauty of wood is faithfully imparted to the surface of the flooring, and the impact resistance of the flooring surface is greatly improved.

It is another object of the present invention to provide a flooring comprising a high-density fiberboard as a base layer, a waterproof backing layer formed under the base layer, and a surface coating layer in which the problem of deformation caused by a variation in humidity is perfectly solved by the formation of the waterproof backing layer, and the surface physical properties, such as scratch resistance and indentation resistance, of the flooring are greatly improved by the addition of a material selected from glass chops, ceramics, nano-sized inorganic materials, silica and mixtures thereof to the surface coating layer, thereby protecting the surface of the flooring against damage, e.g., indentation and breakage, caused by a heavy or sharp object.

It is yet another object of the present invention to provide a process for manufacturing a flooring with improved workability and productivity which comprises forming a primer layer, a transfer-printed layer, a surface coating layer, and a waterproof backing layer under respective optimum conditions.

### Technical Solution

According to a first aspect, the present invention provides a flooring comprising a waterproof backing layer (50), a high-density fiberboard layer (40), a primer layer (30) made using a two-solution type resin containing 30 to 70% by weight of aqueous acrylic urethane to which 1 to 5% by weight of an inorganic pigment is added, a transfer-printed layer formed using a general-purpose polyethylene terephthalate transfer paper, and a surface coating layer (10) laminated in this order from the bottom.

The flooring of the present invention is low-priced and highly moisture-resistant, compared to wood floorings and general laminate floorings. Further, since direct transfer printing is performed on the high-density fiberboard, the flooring of the present invention exhibits greatly improved impact resistance and high thermal conductivity, which is thus advantageous in terms of energy saving, compared to water-resistant plywood floorings for under-floor heating systems.

The greatest advantage of the flooring according to the present invention is that the natural beauty of wood is faithfully imparted to the surface of the flooring by elaborate transfer printing, compared to the natural beauty of wood of laminate floorings, which are manufactured by sequentially laminating a printed layer and a melamine-impregnated overlay sheet on a high-density fiberboard as a base layer. Other advantages of the flooring according to the present invention are superior impact resistance, a feeling of warmness to consumers, and low price.

The prime layer is made using a two-solution type resin containing aqueous acrylic urethane (30 to 70 % by weight). 1 to 5 % by weight of an inorganic pigment is preferably added to the two-solution type resin to cover the background pattern of the high-density fiberboard.

The primer layer serves to enhance the adhesion between the high-density fiberboard layer and the transfer-printed layer, and is effective in enhancing the waterproof property of the finished product. Waterproof property is an important requirement for floorings.

The transfer-printed layer is made using a general-purpose polyethylene terephthalate (PET) transfer paper.

The waterproof backing layer is formed by coating the bottom surface of the high-density fiberboard layer with an ultraviolet (UV) curable surface-treating agent, a heat curable surface-treating agent, a synthetic resin, wax, a silicone-based water-repellent agent, a silicone-based waterproofing agent, or the like. The formation of the waterproof backing layer on the bottom surface of the high-density fiberboard layer can solve the problem of deformation caused by a variation in humidity.

The surface coating layer consists of a surface primer layer, an under coating layer, an intermediate coating layer and a top coating layer. The primer layer is made using an aqueous acrylic resin having a molecular weight of 100,000 to 200,000. An inorganic material selected from ceramics, glass chops, clays, silica and mixtures thereof is added to the under coating layer and the top coating layer to greatly improve the surface physical properties, such as scratch resistance, of the flooring, thereby preventing the surface of the flooring from damage, e.g., indentation, breakage and scratch, caused by a heavy or sharp object.

Finally, the flooring of the present invention is processed to have a tongue and groove (T & G) shape, a click system or a linking structure for a connector so that it can be joined to another flooring, which is the same one as the flooring of the present invention.

According to a second aspect, the present invention provides a process for manufacturing a flooring comprising the steps of:
forming a waterproof backing layer (50) under a high-density fiberboard layer (40);
forming a primer layer (30) on the high-density fiberboard layer using a two-solution type resin containing 30 to 70% by weight of aqueous acrylic urethane to which 1 to 5% by weight of an inorganic pigment has been added;
performing transfer printing on the surface of the primer layer to form a transfer- printed layer (20) using a general-purpose polyethylene terephthalate transfer paper;
forming a surface coating layer (10) on the transfer-printed layer; and
cutting and shaping the resulting structure.

The step of forming a primer layer on the high-density fiberboard layer is preferably carried out by coating the aqueous resin to a predetermined thickness on the high-density fiberboard layer, and passing the coated structure through an oven at 80 to 160°C for 30 seconds to 5 minutes to dry and cure the coated structure.

Taking into consideration the prevention of the deformation and improvement of the productivity of the final product, it is preferred to perform the transfer printing under 0.4 to 1.0 MPa at 80 to 120°C for 5 seconds to 2 minutes.

### Brief Description of the Drawings

The above and other objects, features and other advantages of the present invention will be more clearly understood from the following detailed description taken in conjunction with the accompanying drawings, in which:
FIG. 1 is a cross-sectional view of a flooring according to an embodiment of the present invention;
FIG. 2 is a process chart illustrating a process for manufacturing a flooring according to an embodiment of the present invention; and
FIG. 3 is a top view of a finished product consisting of two floorings of the present invention, both of which have a tongue and groove (T & G) shape.

### Best Mode for Carrying Out the Invention

The present invention will now be described in detail with reference to the accompanying drawings.

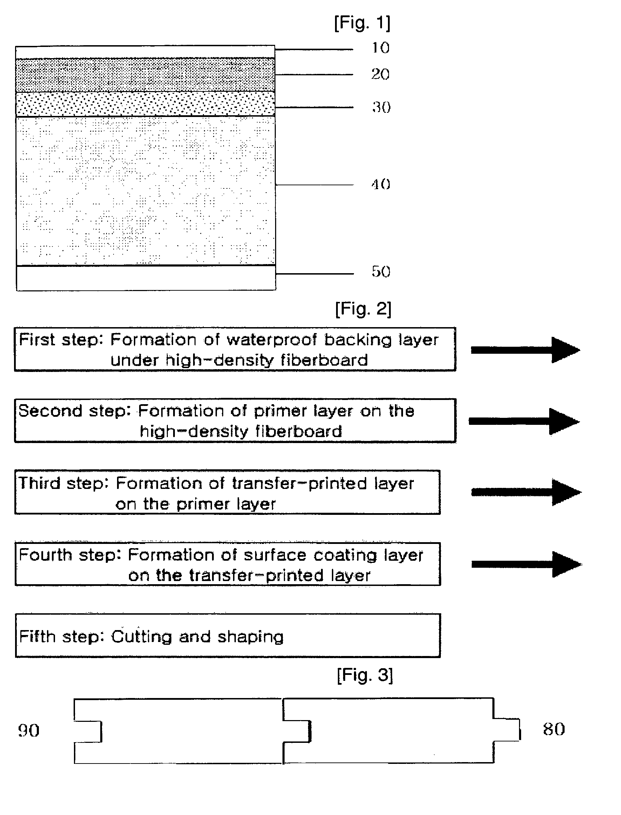

FIG. 1 is a cross-sectional view of a flooring according to an embodiment of the present invention. As show in FIG. 1, the flooring comprises a surface coating layer 10, a transfer-printed layer 20, a primer layer 30, a high-density fiberboard layer 40, and a waterproof backing layer 50 laminated in this order from the top. To enhance the water resistance of the flooring, the surface of the transfer-printed layer 20 is coated to form the surface coating layer 10, and the bottom surface of the high-density fiberboard layer is coated with a UV curable or heat curable surface-treating agent essentially composed of urethane acrylate or at least one material selected from synthetic resins, e.g., polyolefin and polyester, wax, silicone-based water-repellent agents and silicone-based waterproofing agents to form the waterproof backing layer 50. The waterproof backing layer serves to prevent penetration of moisture into the high-density fiberboard layer 40 to protect the flooring from decay and deformation.

The transfer-printed layer 20 is formed by using transfer printing techniques in order to make the most of natural beauty of wood. Depending on the needs of consumers, patterns of all species of trees, including oak, birch, cherry, maple and walnut, may be faithfully and freely realized. For the transfer printing, general-purpose PET transfer printing papers is used.

The high-density fiberboard layer 40 is preferably formed of a high-density fiberboard (HDF) having a specific weight of 0.85 to 1.1 g/cm³. The high-density fiberboard is much harder, exhibits better water resistance and dimensional stability, and has higher mechanical strength than a medium-density fiberboard (MDF) or a particle board (PB). Accordingly, when the high-density fiberboard is used to form the base layer, the dimensional stability, impact strength and moisture resistance of the flooring can be greatly improved.

The high-density fiberboard is low priced and exhibits good wear resistance and impact resistance, compared to a water-resistant plywood. In addition, the high-density fiberboard is free of defects, such as knots, and exhibits uniform physical properties because fibers are orderly arranged in every direction. The HDF can be easily proce ssed so as to have a very smooth and soft surface. Accordingly, the surface of the flooring using the HDF gives a feeling of smoothness and softness. The flooring of the present invention is processed to have a mechanical fixing system, such as a click construction structure or a linking structure for a connector so that it can be integrally joined to another flooring, which is the same one as the flooring of the present invention, in a vertical or horizontal direction. In addition, the flooring of the present invention elastically responds to expansion and shrinkage, thus avoiding loosening or damage to bonding of the floorings.

The primer layer 30 serves to cover the background fiber pattern of the high-density fiberboard and enhance the adhesion between the high-density fiberboard layer 40 and the transfer-printed layer 20. The primer layer is made of an aqueous acrylic urethane resin

As regulations restricting the use of volatile organic compounds (VOCs) are increasingly stringent and sick house syndrome is highlighted as a serious problem, general organic solvent type resins that are widely used in the art cannot be used to manufacture the flooring of the present invention. Instead, an aqueous resin is used in the present invention to reduce the amount of formaldehyde released to almost zero and prevent the occurrence of volatile organic solvents.

The formation of the surface coating layer 10 is achieved by UV coating the surface of the transfer-printed layer 20. The surface coating layer generally consists of a surface primer layer, an under coating layer, an intermediate coating layer and a top coating layer, which are sequentially formed on the transfer-printed layer 20.

To enhance the impact resistance and indentation resistance of the flooring surface, the surface primer layer is formed by UV curing of monomers and oligomers having a relatively low molecular weight. This UV curing facilitates the coating of the monomers and oligomers and is preferably carried out for 10 seconds to 4 minutes.

An inorganic material, such as a glass chop, may be added to the under coating layer to enhance the surface physical properties of the flooring. At this time, the inorganic material is preferably added in an amount of 0.1% to 10% by weight.

A nano-sized inorganic material or silica may be added to the top coating layer to enhance the scratch resistance and wear resistance of the flooring surface. At this time, the nano-sized inorganic material or silica is preferably added in an amount of 0.1% to 10% by weight.

The waterproof backing layer 50 is laminated under the high-density fiberboard layer 40 to enhance the water resistance of the flooring. The waterproof backing layer 50 is formed by coating the bottom surface of the high-density fiberboard layer 40 with a UV curable or heat curable surface-treating agent essentially composed of urethane acrylate or at least one material selected from synthetic resins, e.g., polyolefin and polyester, wax, silicone-based water-repellent agents and silicone-based waterproofing agents. The waterproof backing layer functions to prevent penetration of moisture into the high-density fiberboard layer 40 to protect the flooring from decay and deformation.

Taking into consideration the ease of assembly, the flooring of the present invention is preferably processed into a general tongue and groove (T & G) shape, but is not limited to this structure. For example, the flooring of the present invention may be processed to have a mechanical fixing system, such as a click construction structure or a linking structure for a connector so that it can be integrally joined to another flooring, which is the same one as the flooring of the present invention, in a vertical or horizontal direction.

FIG. 2 is a process chart illustrating a process for manufacturing a flooring according to an embodiment of the present invention. As shown in FIG. 2, the process comprises the steps of forming a waterproof backing layer under a high-density fiberboard layer 40 (a first step), forming a primer layer 30 on the high-density fiberboard layer (a second step), forming a transfer-printed layer 20 on the primer layer (a third step), performing surface coating of the transfer-printed layer 20 (a fourth step), and cutting and shaping the resulting structure (a fifth step).

In the second step, the primer layer 30 is preferably dried at 80 to 160°C. An excessively high drying temperature causes severe deformation of the high-density fiberboard. Meanwhile, too low a drying temperature may cause poor adhesion between the transfer-printed layer 20 and the high-density fiberboard layer 40. Even when the two layers are adhered to each other, bad surface leveling may be caused at too low a drying temperature.

In the third step, transfer printing is preferably performed under a pressure of 0.4 to 1.0 MPa. The transfer-printed layer may be ruptured at too high a printing pressure. Meanwhile, poor printing may be caused at too low a printing pressure. The transfer printing is preferably performed for 5 seconds to 2 minutes. Too short a printing time may cause occurrence of poor printing due to incomplete transfer of a printing ink. Meanwhile, too long a printing time may result in rupture of the transfer-printed layer.

Unlike the process shown in FIG. 2, according to further embodiments of the present invention, a flooring may be manufactured by sequentially forming a primer layer 30, a transfer-printed layer 20 and a surface coating layer 10 on a high-density fiberboard layer 40 and forming a waterproof backing layer 50 under the high-density fiberboard layer 40; or by forming a primer layer 30 on a high-density fiberboard layer 40, forming a waterproof baking layer 50 under the high-density fiberboard layer 40, and sequentially forming a transfer-printed layer 20 and a surface coating layer on the primer layer 30.

In the fourth step, a surface coating layer 10 is formed on the transfer-printed layer 20. The surface coating is performed by UV curing, which is a technique employed to manufacture general floorings. Specifically, a surface primer layer, an under coating layer, an intermediate coating layer and a top coating layer are sequentially formed on the transfer-printed layer 20, followed by UV curing.

The surface coating layer 10 is made of a UV curable or heat curable synthetic resin essentially composed of urethane acrylate. To achieve desired surface physical properties, such as superior resistance to indentation and impact, the surface coating layer 10 is made of at least one resin selected from the group consisting of epoxy resins, polyamide resins, urea resins and acrylate resins. Particularly preferred is an epoxy resin.

To enhance the impact resistance and indentation resistance of the flooring surface, the surface primer layer is formed by curing oil-phase or aqueous monomers and oligomers having a relatively low molecular weight at 80 to 150°C. This UV curing facilitates coating of the monomer and oligomer layer on the transfer-printed layer and is preferably carried out for 10 seconds to 4 minutes.

An inorganic material selected from ceramics, glass chops and mixtures thereof may be added to the under coating layer. The inorganic material is preferably added in an amount of 0.1% to 10% by weight. At least one inorganic or nano-sized inorganic material selected from clays, ceramics and silica may be added to the top coating layer to improve the scratch resistance of the flooring surface. It is preferred to sufficiently disperse 0.1 to 10 parts by weight of the inorganic material in 100 parts by weight of a urethane acrylate resin and add the dispersion to the top coating layer so as not to affect the transparency of the top coating layer.

FIG. 3 is a top view of a finished product consisting of two floorings of the present invention, both of which have a tongue and groove (T & G) shape. As shown in FIG. 3, four sides of the finished product in both length and width directions are processed into two tongue sites 80 and two groove sites 90. Alternatively, the flooring of the present invention may be processed to have a mechanical fixing system, such as a click system or a system for a connector, so that it can be integrally joined to another flooring, which is the same one as the flooring of the present invention, in a vertical or horizontal direction.

### Mode for the Invention

Hereinafter, preferred embodiments of the present invention will be explained. However, these embodiments are given for the purpose of illustration and are not intended to limit the present invention.

### EXAMPLES

### Example 1

A UV curable coating layer was formed under a high-density fiberboard layer 40 as a base layer to form a waterproof backing layer 50. A primer layer 30 was formed on the high-density fiberboard layer 40 and a transfer-printed layer 20 was formed thereon under heat and pressure. A surface coating layer 10 was formed on the transfer-printed layer 20, followed by cutting and processing into a tongue 80 and groove 90 shapes to complete manufacture of the flooring shown in FIG. 1.

Specifically, the primer layer 30 was formed using a two-solution type resin containing 50% by weight of aqueous acrylic urethane, and dried by passing the coated structure through an oven at 120°C for 2 minutes. The transfer-printed layer was made by using a general-purpose PET paper under heat (100°C) and pressure (0.7 MPa) for one minute. The base layer 40 was made using an HDF. The HDF used herein had a density of 900 kg/m³ or more, water content of 4.0 to 7.0% and a thickness of 7.5 to 8.0 mm.

A surface primer layer, an under coating layer and an intermediate coating layer were sequentially formed on the transfer-printed layer 20. 5% by weight of a ceramic was added to the under coating layer. The resulting structure was cut to a width of 85 to 95 mm and a length of 850 to 950 mm using a tenoner, and the sides were processed to have a T & G shape. A top coating layer containing 5% by weight of a nano-sized inorganic material was formed on the intermediate coating layer, completing manufacture of a final flooring.

### Example 2 (for reference)

A flooring was manufactured in the same manner as in Example 1, except that the primer layer 30 was made by using a one-solution type resin containing 62% by weight of aqueous acrylate and drying was carried out in an oven at 120°C for one minute.

### Comparative Example 1

A natural veneer was laminated on a water-resistant plywood as a base and surface-coated by UV curing to manufacture a plywood flooring for an under-floor heating system.

### Comparative Example 2

A melamine resin was coated on a high-density fiberboard (HDF) as a base to manufacture a laminate flooring.

### Test Example 1

The physical properties of the floorings manufactured in Examples 1 and 2 were compared with those of the floorings manufactured in Comparative Examples 1 and 2. The results are shown in Table 1.

**Table 1**

| Example No. | Indentation resistance | Breakage resistance | Dimensional stability (%) | | | | Scratch resistance | Thickness expansion rate after water absorption | |
|---|---|---|---|---|---|---|---|---|---|
| | | | After heating | | After dipping | | | U type | M type |
| | | | L | W | L | w | | | |
| Example 1 | 20 cm | 50 cm | -0.17 | -0.20 | 0.07 | 0.11 | 5N | 2.5% | 30% |
| Exemple 2 | 20 cm | 50 cm | -0.20 | -0.20 | 0.08 | 0.11 | 5N | 2.5% | 35% |
| Comparative Example 1 | 10 cm | 20 cm | -0.15 | -0.18 | 0.05 | 0.19 | 3N | - | - |
| Comparative Example 2 | 10 cm | 35 cm | -0.26 | -0.32 | 0.10 | 0.15 | 4N | 2.5% | 50% |

The indentation resistance of the floorings was evaluated by dropping a flat-head screwdriver weighing 110g onto the surfaces (inclined at an angle of 45 degrees relative to the horizontal plane) of the floorings and measuring a height at which surface indentation was observed. As is apparent from the data shown in Table 1, the surfaces of the laminate flooring (Comparative Example 2) and the plywood flooring for an under-floor heating system (Comparative Example 1) were indented when the flat-head screwdriver was dropped from a height of 10 cm, while the surfaces of the floorings (Examples 1 and 2) were indented when the flat-head screwdriver was dropped from a height of 20 cm.

The breakage resistance of the floorings was evaluated by dropping an iron ball having a diameter of 3 cm and a weight of 228g onto the surfaces of the floorings and measuring a height at which surface breakage was observed. As can be seen from the data shown in Table 1, the surfaces of the laminate flooring (Comparative Example 2) and the plywood flooring for an under-floor heating system (Comparative Example 1) were broken when the iron ball was dropped from heights of 35 cm and 20 cm, respectively, while the surfaces of the floorings according to the present invention (Examples 1 and 2) were broken when the iron ball was dropped from a height of 50 cm.

The dimensional stability of the floorings was evaluated by allowing the floorings to stand in an oven at 80°C and a water bath at room temperature for 24 hours and measuring dimensional variations in length (L) and width (W). According to the test results of Table 1, the dimensional stability of the floorings according to the present invention was slightly poor when compared to that of the plywood flooring for an under-floor heating system, but was excellent when compared to that of the laminate flooring.

The scratch resistance of the floorings was evaluated by measuring the degree of surface scratching under a load (N) using a Clemens-type scratch hardness tester in accordance with the procedure described in Paragraph 3.15 of the standard method KS M3332. From the test results of Table 1, it could be confirmed that the scratch resistance (5.0 N) of the floorings according to the present invention was superior to that (3.0 N) of the plywood flooring for an under-floor heating system and that (4.0 N) of the laminate flooring.

The thickness expansion rate of the floorings after water absorption was evaluated by dipping the floorings in water at room temperature for 24 hours (U type, Paragraph 6.9 of KS F32009) and water at 70°C for 2 hours (M type), and measuring the variation in the thickness of the floorings. As is evident from the test results of Table 1, the thickness expansion rates (2.5%) of the floorings according to the present invention were comparable to the absorption, but the thickness expansion rates (30% and 35%) of the floorings (Examples 1 and 2) according to the present invention were much lower than the thickness expansion rate (50%) of the laminate flooring after M type water absorption.

The warp stability of the floorings (Examples 1 and 2) was compared with that of the floorings (Comparative Examples 1 and 2). The results are shown in Table 2.

**Table 2**

| Example No. | Warp stability | |
|---|---|---|
| | Width (W, mm) | Length (L, mm) |
| Example 1 | 0.03 | 1.21 |
| Example 2 | 0.03 | 1.30 |
| Comparative Example 1 | 0.15 | 5.77 |
| Comparative Example 2 | 0.17 | 0.96 |

The warp stability of the floorings was evaluated by allowing the samples to stand in an oven at 80 ± 2°C for 24 hours and measuring the number of curls and domes. As a result, the warp stability in the width direction of the floorings according to the present invention was excellent when compared to the laminate flooring and the plywood flooring for an under-floor heating system. In addition, the warp stability (1.21 mm and 1.30 mm) in the lengthwise direction of the floorings (Examples 1 and 2) according to the present invention was slightly poor when compared to that (0.96 mm) of the conventional laminate flooring (Comparative Example 2), but was much better than that (5.77 mm) of the plywood flooring (Comparative Example 1) for an under-floor heating system.

From these experimental results, it could be presumed that the floorings of the present invention showed superior surface physical properties, e.g., superior resistance to indentation and breakage caused by a heavy or sharp object, as compared to the plywood flooring for an under-floor heating system and the laminate flooring, and that the balance of the floorings of the present invention was maintained due to the symmetrically designed structure, thus making the floorings stable.

### Industrial Applicability

As apparent from the above description, according to the flooring of the present invention, an aqueous resin (e.g., aqueous acrylic urethane) is coated on a high-density fiberboard as a core layer to form a primer layer and transfer printing is performed on the surface of the primer layer to form a printed layer so that the background fiber pattern of the high-density fiberboard is covered and the adhesion of the core layer to the printed layer is enhanced.

In addition, according to the flooring of the present invention, direct transfer printing is performed on the surface of the high-density fiberboard so that the impact resistance of the flooring is greatly improved. The addition of an organic material selected from glass chops, ceramics, clays, silica and mixtures thereof to a surface coating layer formed on the printed layer leads to considerable improvement of the surface physical properties, such as indentation resistance and scratch resistance, of the flooring. A waterproof layer formed under the high-density fiberboard layer serves to solve the problem of deformation caused by a variation in humidity and provides excellent thermal conductivity to the flooring when compared to wood.

Furthermore, according to the flooring of the present invention, the transfer-printed layer faithfully realizes the natural beauty of wood, and particularly, direct transfer printing on the high-density fiberboard layer is ensured, thus minimizing an increase in manufacturing cost, which arises from the use of expensive materials for surface layers of conventional floorings.

## Claims

1. A flooring comprising a waterproof backing layer (50), a high-density fiberboard layer (40), a primer layer (30) made using a two-solution type resin containing 30 to 70% by weight of aqueous acrylic urethane to which 1 to 5% by weight of an inorganic pigment is added, a transfer-printed layer formed using a general-purpose polyethylene terephthalate transfer paper, and a surface coating layer (10) laminated in this order from the bottom.

2. A flooring according to Claim 1, wherein the waterproof backing layer is formed by coating the bottom surface of the high-density fiberboard layer with at least one material selected from ultraviolet (UV) curable surface-treating agents, heat curable surface-treating agents, synthetic resins, wax, silicone-based water-repellent agents, and silicone-based waterproofing agents.

3. A flooring according to Claim 1, wherein the surface coating layer includes a surface primer layer, an under coating layer, an intermediate coating layer and a top coating layer sequentially formed on the transfer-printed layer.

4. A flooring according to Claim 3, wherein the under coating layer and the top coating layer contain an inorganic material.

5. A flooring according to Claim 4, wherein the inorganic material is selected from ceramics, glass chops, clay, silica, and mixtures thereof.

6. A flooring according to Claim 1, wherein the flooring has a tongue (80) and groove (90) (T & G) shape, a click system, or a linking structure by a connector.

7. A process for manufacturing a flooring comprising the steps of:
forming a waterproof backing layer (50) under a high-density fiberboard layer (40);
forming a primer layer (30) on the high-density fiberboard layer using a two-solution type resin containing 30 to 70% by weight of aqueous acrylic urethane to which 1 to 5% by weight of an inorganic pigment has been added;
performing transfer printing on the surface of the primer layer to form a transfer-printed layer (20) using a general-purpose polyethylene terephthalate transfer paper;
forming a surface coating layer (10) on the transfer-printed layer; and
cutting and shaping the resulting structure.

8. A process according to Claim 7, wherein the primer layer (30) is formed by coating the aqueous resin on the high-density fiberboard layer, and drying the coated structure in an oven at 80 to 160°C for 30 seconds to 5 minutes.

9. A process according to Claim 7, wherein the transfer printing is performed under a pressure of 0.4 to 1.0 MPa at 80 to 120°C for 5 seconds to 2 minutes.

## Patentansprüche

1. Fußboden, umfassend:
eine wasserdichte Trägerschicht (50), eine hochdichte Faserplatten(HDF)-Schicht (40), eine Grundierungsschicht (30), die unter Verwendung von Zweikomponentenharz hergestellt ist, das 30 bis 70 Gew.-% wässriges Acryl-Urethan enthält, dem 1 bis 5 Gew.-% anorganisches Pigment zugesetzt sind, eine transfergedruckte Schicht,
die unter Verwendung von Allzweck-Polyethylenterephthalat-Transferpapier gebildet ist, und eine Oberflächenüberzugsschicht (10), die in dieser Reihenfolge von unten laminiert sind.

2. Fußboden nach Anspruch 1, in dem die wasserdichte Trägerschicht durch Beschichten der unteren Oberfläche der hochdichten Faserplatten-Schicht mit mindestens einem Material gebildet ist, das aus Ultraviolett(UV)-härtbaren Oberflächenbehandlungsmitteln, wärmehärtbaren Oberflächenbehandlungsmitteln, synthetischen Harzen, Wachs, wasserabweisenden Mitteln auf Silikon-Basis und Abdichtungsmitteln auf Silikon-Basis ausgewählt ist.

3. Fußboden nach Anspruch 1, in dem die Oberflächenüberzugsschicht eine Oberflächen-Grundierungsschicht, eine Unterbeschichtung, eine Zwischenbeschichtung und eine Oberbeschichtung umfasst, die nacheinander auf der transfergedruckten Schicht ausgebildet sind.

4. Fußboden nach Anspruch 3, in dem die Unterbeschichtung und die Oberbeschichtung ein anorganisches Material umfassen.

5. Fußboden nach Anspruch 4, in dem das anorganische Material aus Keramiken, Glaspartikeln, Ton, Silica und Gemischen davon ausgewählt ist.

6. Fußboden nach Anspruch 1, wobei der Fußboden eine Zunge (80) und Nut (90) (T & G) Form, ein Klicksystem, oder eine Verknüpfungsstruktur mit einem Verbinder hat.

7. Verfahren zur Herstellung eines Fußbodens, das folgende Schritte umfasst:
Bilden einer wasserdichten Trägerschicht (50) unter einer hochdichten Faserplatten-Schicht (40);
Bilden einer Grundierungsschicht (30) auf der hochdichten Faserplatten-Schicht unter Verwendung von Zweikomponentenharz, das 30 bis 70 Gew.-% wässriges Acryl-Urethan enthält, dem 1 bis 5 Gew.-% anorganisches Pigment zugesetzt sind;
Durchführen von Transferdruck auf der Oberfläche der Grundierungsschicht unter Verwendung von Allzweck-Polyethylenterephthalat-Transferpapier, um eine transfergedruckte Schicht (20) zu bilden;
Bilden einer Oberflächenüberzugsschicht (10) auf der transfergedruckten Schicht; und
Schneiden und Formen der resultierenden Struktur.

8. Verfahren nach Anspruch 7, bei dem die Grundierungsschicht (30) durch Auftragung des wässrigen Harzes auf die hochdichte Faserplatten-Schicht und Trocknung der beschichteten Struktur in einem Ofen bei 80 bis 160 °C für 30 Sekunden bis 5 Minuten gebildet wird.

9. Verfahren nach Anspruch 7, bei dem der Transferdruck bei einem Druck von 0,4 bis 1,0 MPa bei 80 bis 120 °C für 5 Sekunden bis 2 Minuten durchgeführt wird.

## Revendications

1. Revêtement de sol comprenant une couche de support imperméable à l'eau (50), une couche de carton fibre de haute densité (40), une couche primaire (30) réalisée en utilisant une résine de type à deux solutions contenant 30 à 70% en poids d'uréthane acrylique aqueux à laquelle 1 à 5% en poids d'un pigment inorganique est ajouté, une couche imprimée par transfert formée en utilisant un papier de transfert en polyéthylène téréphtalate à usage général, et une couche de revêtement de surface (10) stratifiées dans cet ordre depuis le bas.

2. Revêtement de sol selon la revendication 1, dans lequel la couche de support imperméable à l'eau est formée par revêtement de la surface inférieure de la couche de carton fibre de haute densité avec au moins une matière choisi parmi des agents de traitement de surface durcissables aux ultraviolets (UV), des agents de traitement de surface thermodurcissables, des résines synthétiques, de la cire, des agents hydrofuges à base de silicone, et des agents d'imperméabilisation à base de silicone.

3. Revêtement de sol selon la revendication 1, dans lequel la couche de revêtement de surface comporte une couche primaire de surface, une sous-couche de revêtement, une couche de revêtement intermédiaire et une couche de revêtement supérieure formées successivement sur la couche imprimée par transfert.

4. Revêtement de sol selon la revendication 3, dans lequel la sous-couche de revêtement et la couche de revêtement supérieure contiennent un matériau inorganique.

5. Revêtement de sol selon la revendication 4, dans lequel le matériau inorganique est choisi parmi de la céramique, des découpes de verre, de l'argile, de la silice et leurs mélanges.

6. Revêtement de sol selon la revendication 1, dans lequel le revêtement de sol a une forme de languette (80) et rainure (90), un système d'encliquetage, ou une structure de liaison par un connecteur.

7. Processus de fabrication d'un revêtement de sol comprenant les étapes consistant :
à former une couche de support imperméable à l'eau (50) sous une couche de carton fibre de haute densité (40) ;
à former une couche primaire (30) sur la couche de carton fibre de haute densité en utilisant une résine de type à deux solution contenant 30 à 70% en poids d'uréthane acrylique aqueux à laquelle 1 à 5% en poids d'un pigment inorganique a été ajouté ;
à effectuer une impression par transfert sur la surface de la couche primaire pour former une couche imprimée par transfert (20) en utilisant un papier de transfert en polyéthylène téréphtalate à usage général ;
à former une couche de revêtement de surface (10) sur la couche imprimée par transfert ; et
à couper et à mettre en forme la structure résultante.

8. Processus selon la revendication 7, dans lequel la couche primaire (30) est formée par revêtement de la couche de carton fibre de haute densité avec la résine aqueuse, et par séchage de la structure revêtue dans un four à une température allant de 80 à 160°C pendant 30 secondes à 5 minutes.

9. Processus selon la revendication 7, dans lequel l'impression par transfert est effectuée sous une pression allant de 0,4 à 1,0 MPa à une température allant de 80 à 120°C pendant 5 secondes à 2 minutes.
